# EUROPEAN PATENT APPLICATION

(11) **EP 4 563 942 A1**
(43) Date of publication of application: **04.06.2025**
(21) Application number: 24205316.3
(22) Date of filing: 08.10.2024
(51) Int. Cl.: G01C 21/26, G07C 5/08

(54) **VEHICLE TRAJECTORY RECORDING SYSTEM AND METHOD FOR VEHICLES WITH A SENSOR**

(30) Priority: 30.11.2023 TW 112146684
(71) Applicant: Arcadyan Technology Corporation, Hsinchu City 30071 (TW)
(72) Inventor: Hsu, Wei Hsiang, 30071 Hsinchu City (TW)
(74) Representative: Gee, Steven William

(57) **Abstract**

A vehicle trajectory recording system and method for vehicles with a sensor is disclosed. The system includes a sensor arranged on a vehicle; a control module, electrically connected to the sensor and configured to receive a piece of sensing information from the sensor, analyze the sensing information to determine a traveling direction change event of the vehicle, and analyze the traveling direction change event and determine a driving event of the vehicle; and a recording module, electrically connected to the control module and configured to record a position of the vehicle where the vehicle performed the driving event, mark the position of the vehicle on a map where the driving event occurred, and adjust a driving trajectory of the vehicle.

## Description

### CROSS-REFERENCE TO RELATED APPLICATIONS

This application claims the priority of Taiwanese patent application No. 112146684, filed on November 30, 2023, which is incorporated herewith by reference.

### PRIOR ART

Global Navigation Satellite System (GNSS) provides geographical positioning to signal receivers anywhere on or near the earth through unobstructed connection of four or more GPS (Global Positioning System) satellites and time information.

GPS is a satellite system owned by the U.S. government, and users can use other systems such as GLONASS, Galileo, and BeiDou to obtain GNSS positions. While a vehicle is driven, it can obtain the driving trajectory by recording the GNSS position and apply it to map tools or servers.

Traditional methods of using GNSS systems for trajectory recording include time interval sampling, distance interval sampling and continuous sampling. However, in both time interval sampling method and distance interval sampling method, errors will occur due to the sampling interval. In the driving trajectory of actual driving cases, part of the trajectory may be missed, resulting in recording results that are inconsistent with the actual moving path. In addition, continuous sampling may easily collect excessive data, resulting in significant consumption of device capacity and computing resources.

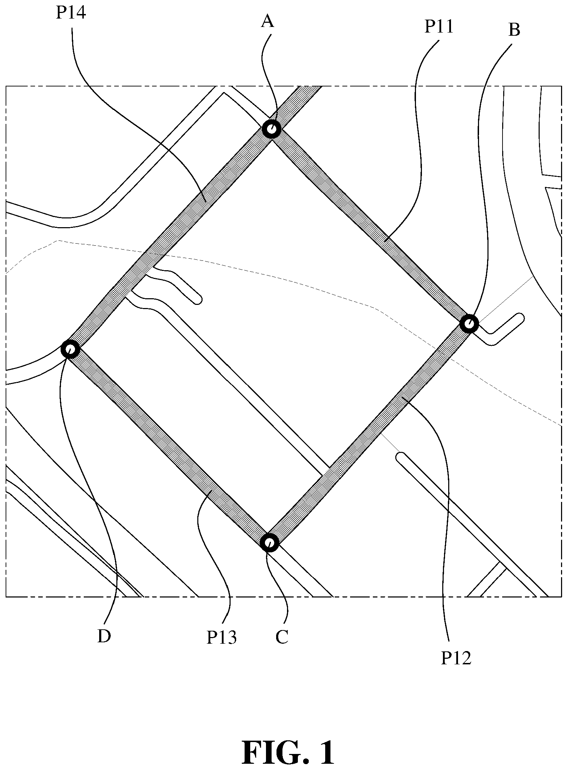

For example, to illustrate the time interval sampling error, please refer to Figure 1 for the actual trajectory of the vehicle. The vehicle's trajectory passes through points A, B, C, and D, before returning to point A, sequentially following path P11, path P12, path P13, and path P14.

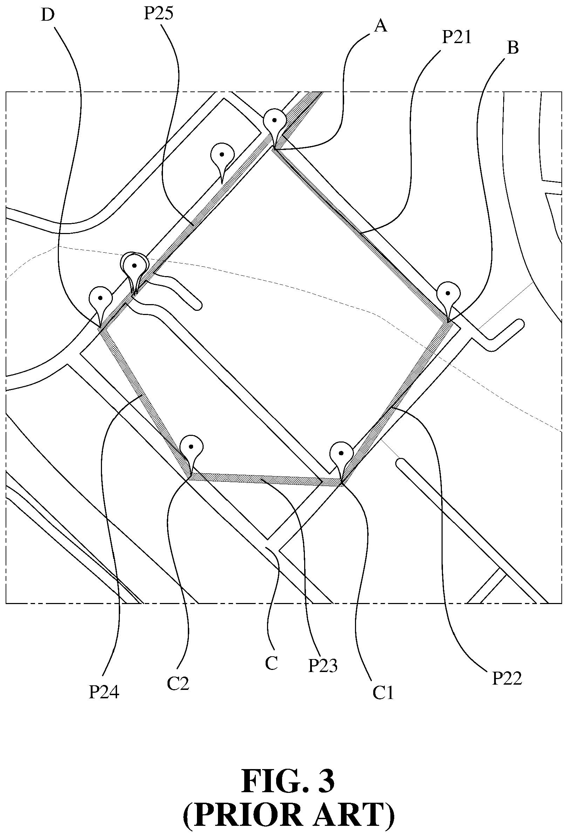

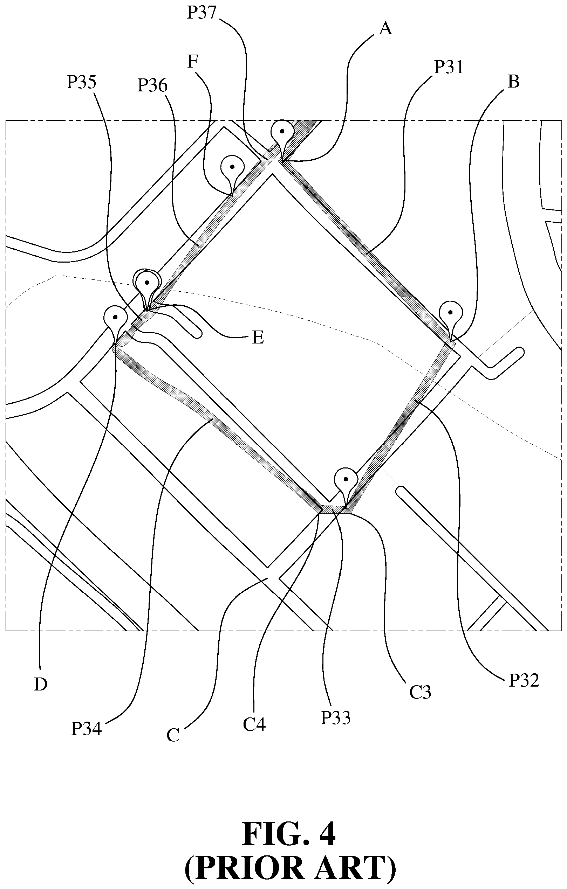

Please refer to Figure 3, the vehicle records its trajectory using a time interval sampling method. The recorded trajectory passes through point A, point B, point C1, point C2, and point D, before returning to point A, sequentially following path P21, path P22, path P23, path P24, and path P25. Please refer to Figure 4 again, the recorded trajectory of the vehicle passes through point A, point B, point C3, point C4, point D, point E, point F and then returns to point A, sequentially following path P31, path P32, and path P33 path P34, path P35, path P36 and path P37. Namely, when the time interval sampling method is used alone with a basic point-to-point connection, the recorded results may either capture non-existent turning events or miss actual turning events. This can lead to incomplete and inaccurate driving trajectories, as shown in Figures 3 and 4.

### BACKGROUND OF THE INVENTION

The present invention relates to a vehicle trajectory technology, in particular to a vehicle trajectory recording system and method for vehicles with a sensor.

### SUMMARY OF THE INVENTION

A primary objective of the present invention is to provide a vehicle trajectory recording system and method for vehicles with a sensor. Changes in the vehicle's direction of travel can be detected by angle detectors, such as gyroscopes, accelerators and torque sensors, and then, algorithms can be used to determine whether the vehicle has performed driving events such as turning. When the above-mentioned driving event (such as a turn) is detected, the vehicle's position is recorded and sent back to the system, and further, the vehicle's position is recorded with the GNSS map and its driving trajectory is adjusted to obtain accurate, clear and complete driving trajectory. Namely, by combining the detection of vehicle turning events and the recording of vehicle positions in the GNSS system, the present invention can effectively solve the above-mentioned error problems caused by using the interval sampling method alone and the problem of excessive data generated by continuous recording.

A vehicle trajectory recording system comprises a sensor disposed on a vehicle, a control module electrically connected to the sensor and configured to receive a sensing information from the sensor, analyze the sensing information to determine a traveling direction change event for the vehicle and analyze the traveling direction change event for determining a driving event of the vehicle, and a recording module electrically connected to the control module and configured to record a position of the vehicle where the vehicle performed the driving event , marking the position on a map where the vehicle performed the driving event, and adjusting a driving trajectory of the vehicle.

A vehicle trajectory recording method comprises receiving a sensing information from a sensor on a vehicle, analyzing the sensing information to detect a traveling direction change event of the vehicle, determining whether the vehicle performs a driving event according to the traveling direction change event, recording a position where the vehicle performed the driving event, when the vehicle is detected to be performing the driving event, marking the position where the vehicle performs the driving event on a map, and adjusting a driving trajectory of the vehicle.

In some embodiments, the sensor is an angle detector, and the angle detector includes a gyroscope, an accelerator or a torque sensor.

In some embodiments, the sensor includes a plurality of angle detectors.

In some embodiments, the driving event is a turn.

In some embodiments, the step of analyzing the sensing information includes continuously calculating an average value of an angle data obtained within a fixed period of time, and determining whether the average value of the angle data is greater than a threshold value; if the average value of the angle data is greater than a threshold value, the driving event, which is the turn, is sensed; if the average value of the angle data is not greater than a threshold value, the driving event does not occur.

In some embodiments, the angle detector is an accelerator, and the steps of analyzing the sensing information further comprise performing a calculation on the sensing information obtained from the accelerator to obtain the angle data, wherein the calculation is performed by determining an angle between the two force vectors of instantaneous accelerations at two time points.

In some embodiments, the position is positioned via a Global Navigation Satellite System (GNSS), and the map is a GNSS map.

In some embodiments, while the step of determining a traveling direction change event for the vehicle is executed, positioning and recording position are performed according to a time interval sampling method, and monitoring whether the driving event of the vehicle of the turn occurs, if the driving event of the turn occurs, a current position of the driving event of the vehicle turning is recorded; and recalculating the time interval of the time interval sampling method.

In some embodiments, the method is used in vehicle terminal boxes and smartphones.

### BRIEF DESCRIPTION OF DRAWINGS

Aspects of the present invention are best understood from the following detailed description when read with the accompanying figures. It is noted that, in accordance with the standard practice in the industry, various features are not drawn to scale. In fact, the dimensions of the various features may be increased or reduced for clarity of discussion.
Figure 1 is a schematic diagram of an actual vehicle movement path.
Figure 2 is a flow chart of a vehicle trajectory recording method of the present invention.
Figure 3 is a schematic diagram of the first vehicle movement trajectory with errors by using conventional time interval control sampling.
Figure 4 is a schematic diagram of the second vehicle movement trajectory with errors by using conventional time interval control sampling.
Figure 5 is a schematic diagram of the vehicle trajectory recording method of the present invention, taking a threshold of 8 degrees per second for the angle data as an example.
Figure 6 is a schematic diagram of the vehicle trajectory recording method of the present invention, taking a threshold of 15 degrees per second for the angle data as an example.
Figure 7 is a flowchart of the process of collecting and calculating angle data by the angle detector in the vehicle trajectory recording method of the present invention.
Figure 8 is a structural block diagram of a vehicle trajectory recording system for recording a trajectory of a vehicle with a sensor according to the present invention.
Figure 9 is a structural block diagram of a vehicle trajectory recording system for recording a trajectory of a vehicle with a plurality of sensors according to the present invention.

### DETAILED DESCRIPTION OF THE INVENTION

It will be appreciated that, although specific embodiments of the present invention are described herein for purposes of illustration, various modifications may be made without departing from the spirit and scope of the present invention.

In the following description, certain specific details are set forth in order to provide a thorough understanding of various aspects of the disclosed subject matter. However, the disclosed subject matter may be practiced without these specific details. In some instances, well-known structures and methods of power delivery comprising embodiments of the subject matter disclosed herein have not been described in detail to avoid obscuring the descriptions of other aspects of the present invention.

Unless the context requires otherwise, throughout the specification and claims that follow, the word "comprise," "have," "include," and variations thereof, such as "comprises," "comprising," "having," "including" are to be construed in an open, inclusive sense, that is, as "including, but not limited to."

Reference throughout the specification to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same aspect. Furthermore, the particular features, structures, or characteristics may be combined in any suitable manner in one or more aspects of the present invention.

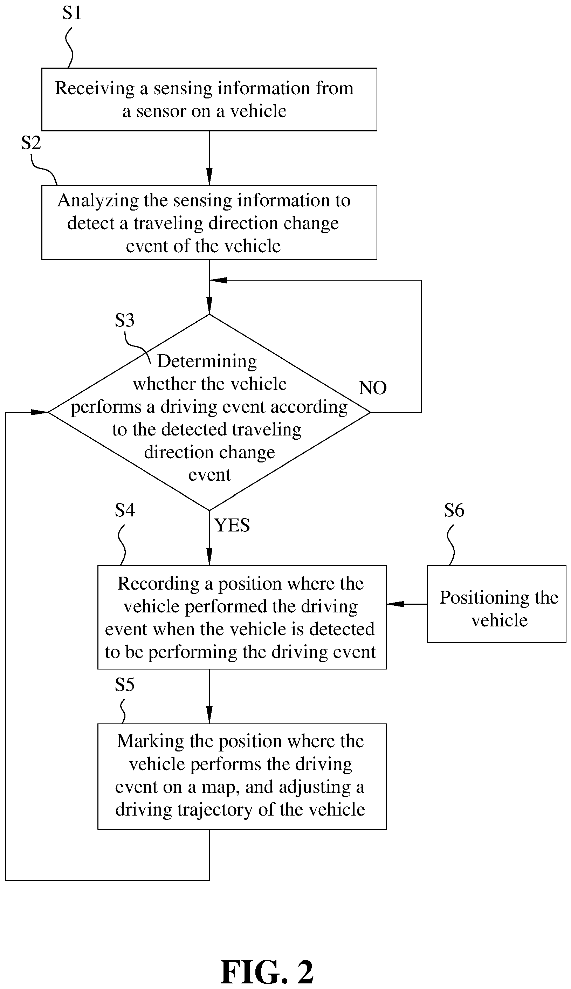

Figure 2 is a flow chart of a vehicle trajectory recording method of the present invention. Please refer to Figure 2, the present invention provides a vehicle trajectory recording method that can be used in vehicle terminal boxes (Telematics BOX) and smartphones. The vehicle trajectory recording method of the present invention includes: receiving a sensing information from at least one sensor on a vehicle (step S1); analyzing the sensing information to detect a traveling direction change event of the vehicle (step S2); determining whether the vehicle performs a driving event according to the detected traveling direction change event (step S3); recording a position where the vehicle performed the driving event when the vehicle is detected performing the driving event (step S4); and marking the position where the vehicle performs the driving event on a map, and adjusting a driving trajectory of the vehicle (step S5).

In step S2, the position can be recorded by using the conventional time interval sampling method. And, in step S3, it is monitored whether a driving event of the vehicle turning occurs. If the driving event of the vehicle turning occurs, the current position where the driving event of the vehicle turning occurs is recorded in step S4; furthermore, the time for "time interval sampling" will be reset to zero and recalculated. For example, the original time interval sampling records the vehicle position every 5 seconds. Therefore, assuming a recording is made at 0 seconds, the next recording should ideally occur at the 5th second. However, since a driving event of the vehicle turning occurred at the 3rd second, at this time, in addition to initiating the position recording due to the driving event of the vehicle turning, the timer will also be reset from 3 seconds to 0 seconds, and the 5-second interval calculation will be restarted. Namely, if there is no further driving event of the vehicle turning after the aforementioned 3 seconds, the next position recording will be made at the 8th second.

In some embodiments, while the vehicle is detected to be performing the driving event in step S4, positioning the vehicle is performed (step S6). Preferably, positioning the vehicle can be performed via a Global Navigation Satellite System (GNSS).

In some embodiments, each position in the vehicle trajectory recording method of the present invention is positioned through a global satellite navigation system (GNSS), but it is not limited thereto. In this embodiment, the map used in the present invention may be a GNSS map.

In some embodiments, traveling direction change and driving events (such as turning) in the vehicle trajectory recording method of the present invention can be detected through an angle detector. Preferably, the angle detector may include a gyroscope, an accelerometer or a torque sensor, but is not limited thereto. Taking the vehicle turning as an example of a driving event, the turning angle, angular speed or torque of the vehicle sensed by the angle detector can be defined and adjusted according to the precision of the angle detector or the accuracy desired by the designer. In step S1, the turning angle of the vehicle will be continuously collected from the angle detector (the angle detector includes a gyroscope, accelerator or torque sensor). In step S2, the average value of the angle data collected within a fixed period of time is continuously calculated, and in step S3, if it is detected that the average value exceeds a threshold value, it is deemed that a turning driving event has occurred. In some embodiments, the threshold value of the angle is 8-15 degrees, but is not limited thereto.

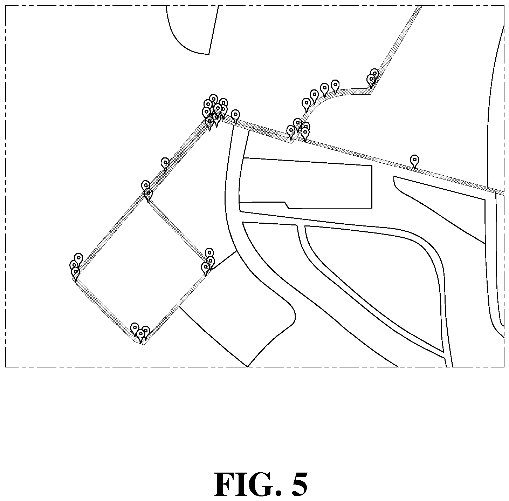

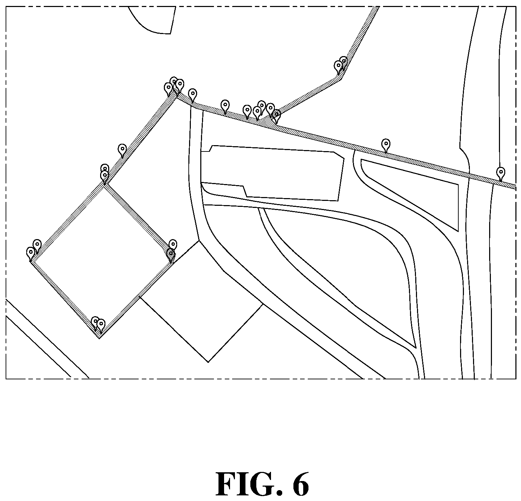

Figure 5 is a schematic diagram of the vehicle trajectory recording method of the present invention, taking a threshold of 8 degrees per second for the angle data as an example. Figure 6 is a schematic diagram of the vehicle trajectory recording method of the present invention, taking a threshold of 15 degrees per second for the angle data as an example. Please refer to Figure 5 and Figure 6 at the same time, which show the path record icons after using 8 degrees and 15 degrees as the threshold values of the angle data respectively. It can be found that, compared to the results shown in Figures 3 and 4 from the aforementioned time interval control sampling method, the position recordings in Figures 5 and 6 are relatively more accurate.

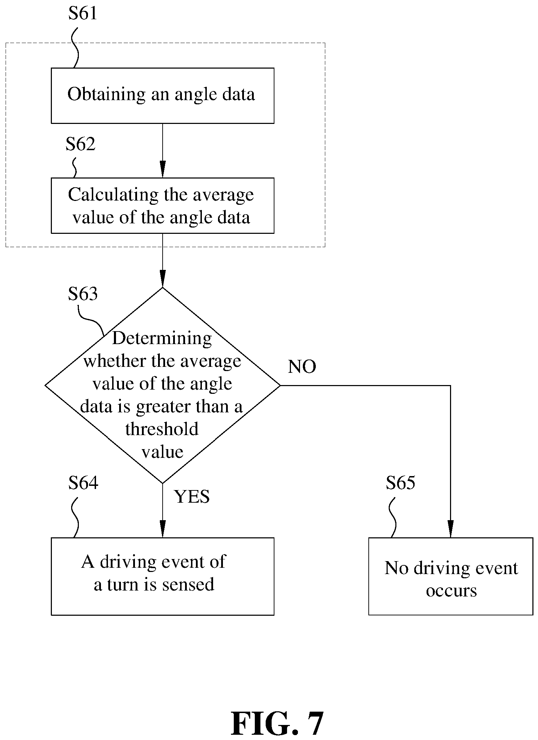

Figure 7 is a flowchart of the angle detector collecting and calculating angle data in the vehicle trajectory recording method of the present invention. Please refer to Figures 2 and 7, in step S2 of Figure 2, the step of detecting the vehicle's traveling direction by analyzing the sensing information from step S1 further includes obtaining an angle data (step S61); continuously calculating the average value of the angle data obtained within a fixed period of time (step S62); determining whether the average value of the angle data is greater than a threshold value (step S63); if the average value of the angle data is greater than a threshold value, a driving event of vehicle turning is sensed (step S64); if the average value of the angle data is not greater than a threshold value, no driving event occurs (step S65). In some embodiments, the angle detector is an accelerator, the step of analyzing the sensing information further comprises, in step S61, calculating the sensing information obtained from the accelerator to obtain the angle data. The calculation is performed by finding the angle between two force vectors of the instantaneous accelerations at two time points before and after (please refer to the following paragraphs for explanation).

The system of the present invention can integrate angle detectors such as gyroscopes, accelerometers or torque sensors to detect changes in the vehicle's traveling direction. Therefore, in the processing of acquired angle data, different processing methods are applied depending on the data source. If the data sources are gyroscopes and torque sensors, the angle data can be acquired without additional data calculations. However, if the data source is an accelerator, additional calculations are required to obtain the angle data. This calculation can be performed by finding the angle between two vectors. For example, the angle can be found between vector A (the acceleration force vector at time point T₀) and vector B (the acceleration force vector at time point T₁).

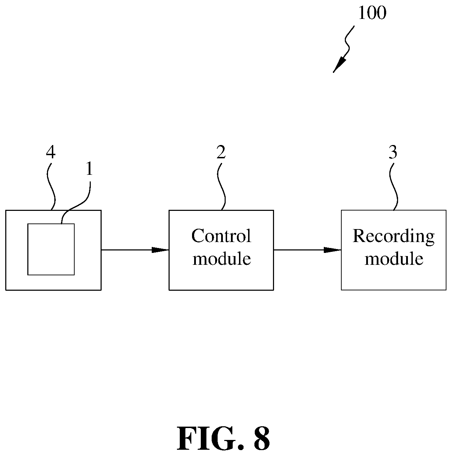

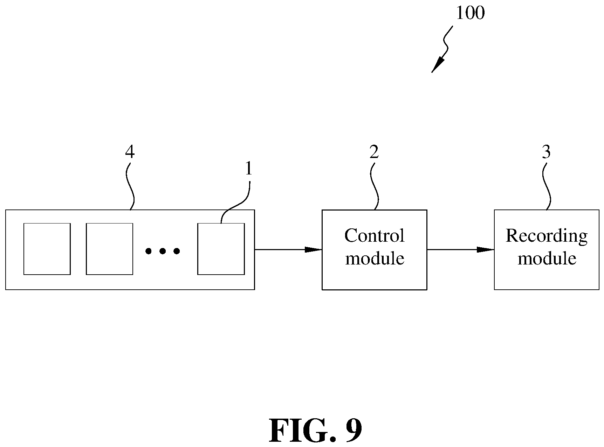

Figure 8 is a structural block diagram of a vehicle trajectory recording system for recording a trajectory of a vehicle with a sensor according to the present invention. Figure 9 is a structural block diagram of a vehicle trajectory recording system for recording a trajectory of a vehicle with a plurality of sensors according to the present invention. Please refer to Figure 8 and figure 9, the vehicle trajectory system 100 for recording the trajectories of vehicles with sensors of the present invention includes a sensor 1, a control module 2 and a recording module 3, wherein, the sensor 1 can comprise one sensor (as shown in Figure 8) or a plurality of sensors (as shown in Figure 9), and the following embodiments take the plurality of sensors (as shown in Figure 9) as an example for explanation.

A plurality of the sensors 1 may be disposed on a vehicle 4.

The control module 2 is electrically connected to the plurality of sensors 1 and configured to: receiving a sensing information from the plurality of sensors 1; analyzing the sensing information to determine a traveling direction change event for the vehicle 4; and analyzing the traveling direction change event and determining a driving event for the vehicle 4. That is, the control module 2 is configured to perform step S1 and step S3.

The recording module 3 is electrically connected to the control module 2 and configured to: recording a position of the vehicle 4 at which the driving event occurred; marking the position on a map where the vehicle 4 performed the driving event; and adjusting a driving trajectory of the vehicle 4. Namely, the recording module 3 is configured to perform steps S4 to S5.

Through the above method, angle detectors such as gyroscopes, accelerators or torque sensors are used to detect changes in the vehicle's traveling direction, and then an algorithm is used to determine whether the vehicle has performed a driving event such as a turn; when the above-mentioned driving event (such as the turn) is detected, the vehicle's position can be recorded and sent back to the system. It is used with the GNSS map to record the vehicle's position and adjust vehicle's driving trajectory to obtain accurate and complete driving trajectory.

## Claims

1. A vehicle trajectory recording system for recording a trajectory of a vehicle, comprising:
a sensor, disposed on the vehicle;
a control module, electrically connected to the sensor and configured to receive a sensing information from the sensor, analyze the sensing information to determine a traveling direction change event for the vehicle, and analyze the traveling direction change event for determining a driving event of the vehicle; and
a recording module, electrically connected to the control module and configured to record a position of the vehicle where the vehicle performs the driving event, and mark the position on a map where the vehicle performed the driving event.

2. The system according to claim 1, wherein the sensor comprises an angle detector, and the angle detector comprises a gyroscope, an accelerator or a torque sensor.

3. The system according to claim 2, wherein the driving event is a turn.

4. The system according to claim 3, wherein the step of analyzing the sensing information comprises continuously calculating an average value of an angle data obtained within a fixed period of time; determining whether the average value of the angle data is greater than a threshold value; and if the average value of the angle data is greater than a threshold value, the driving event of the turn is sensed, and if the average value of the angle data is not greater than a threshold value, the driving event does not occur.

5. The system according to claim 4, wherein the angle detector is an accelerator, and the step of analyzing the sensing information further comprises performing a calculation on the sensing information obtained from the accelerator to obtain the angle data, wherein the calculation is performed by determining an angle between the two force vectors of instantaneous accelerations at two time points.

6. The system according to claim 3, wherein while the step of determining a traveling direction change event for the vehicle is executed, positioning and position recording are performed according to a time interval sampling method, and monitoring whether the driving event of the vehicle of the turn occurs, if there is the driving event of the turn occurs, then recording a current position of the driving event of the turn; and recalculating the interval recorded in this time interval.

7. The system according to claim 1, wherein the system is used in vehicle terminal boxes and smartphones.

8. A vehicle trajectory recording method for recording a trajectory of a vehicle, comprising:
receiving a sensing information from a sensor on the vehicle;
analyzing the sensing information to detect a traveling direction change event of the vehicle;
determining whether the vehicle performs a driving event according to the detected traveling direction change event;
recording a position where the vehicle performed the driving event when the vehicle is detected to perform the driving event; and
marking the position where the vehicle performs the driving event on a map.

9. The method according to claim 8, wherein the sensor is an angle detector, and the angle detector comprises a gyroscope, an accelerator or a torque sensor.

10. The method according to claim 9, wherein the driving event is a turn.

11. The method according to claim 10, wherein the step of analyzing the sensing information comprises continuously calculating an average value of an angle data obtained within a fixed period of time; determining whether the average value of the angle data is greater than a threshold value; and if the average value of the angle data is greater than a threshold value, the driving event of the turn is sensed, and if the average value of the angle data is not greater than a threshold value, the driving event does not occur.

12. The method according to claim 11, wherein the angle detector comprises an accelerator, and the step of analyzing the sensing information further comprises performing a calculation on the sensing information obtained from the accelerator to obtain the angle data, wherein the calculation is performed by determining an angle between the two force vectors of instantaneous accelerations at two time points.

13. The method according to claim 10, wherein while the step of determining a traveling direction change event for the vehicle is executed, positioning and recording position are performed according to a time interval sampling method, and monitoring whether the driving event of the vehicle of the turn occurs, and if the driving event of the turn occurs, a current position of the driving event of the vehicle turning is recorded; and recalculating the time interval of the time interval sampling method.

14. The method according to claim 8, wherein the method is performed in vehicle terminal boxes and smartphones.

15. The method according to claim 8, further comprising adjusting a driving trajectory of the vehicle.
